Europäisches Patentamt

**(19)** European Patent Office

Office européen des brevets

**(11)** **EP 0 923 724 B1**

**(12)** **EUROPÄISCHE PATENTSCHRIFT**

**(45)** Veröffentlichungstag und Bekanntmachung des Hinweises auf die Patenterteilung:
**28.12.2005 Patentblatt 2005/52**

**(21)** Anmeldenummer: 97936606.9

**(22)** Anmeldetag: **08.08.1997**

**(51)** Int Cl.$^7$: **G01N 27/419**, G01N 27/407

**(86)** Internationale Anmeldenummer:
**PCT/DE1997/001683**

**(87)** Internationale Veröffentlichungsnummer:
**WO 1998/010275 (12.03.1998 Gazette 1998/10)**

**(54) MESSANORDNUNG ZUR BESTIMMUNG VON GASBESTANDTEILEN IN GASGEMISCHEN**

MEASURING ARRANGEMENT FOR THE DETERMINATION OF GAS COMPONENTS IN GAS MIXTURES

DISPOSITIF DE MESURE POUR LA DETERMINATION DE COMPOSANTS GAZEUX DE MELANGES GAZEUX

**(84)** Benannte Vertragsstaaten:
**DE ES FR GB IT SE**

**(30)** Priorität: 02.09.1996 DE 19635494
19.12.1996 DE 19652968

**(43)** Veröffentlichungstag der Anmeldung:
**23.06.1999 Patentblatt 1999/25**

**(73)** Patentinhaber: **ROBERT BOSCH GMBH**
**70442 Stuttgart (DE)**

**(72)** Erfinder:
- **DE LA PRIETA, Claudio**
  **D-70569 Stuttgart (DE)**
- **HOETZEL, Gerhard**
  **D-70376 Stuttgart (DE)**
- **SCHMIEDEL, Carmen**
  **D-71672 Marbach (DE)**
- **KITIRATSCHKY, Petra**
  **D-71229 Leonberg (DE)**
- **SCHULTE, Thomas**
  **D-70839 Gerlingen (DE)**
- **WIEMHOEFER, Hans-Dieter**
  **D-48161 Münster (DE)**

**(56)** Entgegenhaltungen:
| | |
|---|---|
| **EP-A- 0 468 500** | **EP-A- 0 678 740** |
| **EP-A- 0 769 694** | **DE-A- 4 439 901** |
| **DE-C- 3 728 618** | **GB-A- 2 287 543** |
| **US-A- 5 397 442** | **US-A- 5 543 025** |

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Meßanordnung, insbesondere auf der Basis von elektrochemischen Meßfühlern, zur Bestimmung von Gasbestandteilen in Gasgemischen, insbesondere in Abgasen von Verbrennungsmotoren, nach dem Oberbegriffe des unabhängigen Hauptanspruchs.

Stand der Technik

Es ist bekannt, daß Abgase von Verbrennungskraftmaschinen, beispielsweise von Dieselmotoren, neben unverbrannten Kraftstoffanteilen und Sauerstoff auch Stickoxide und andere Gase enthalten. Die Zusammensetzung des Abgases wird ganz wesentlich von der Einstellung eines Kraftstoff-Luft-Gemisches bestimmt, mit dem die Verbrennungskraftmaschine betrieben wird. Liegt beispielsweise Kraftstoff im stöchiometrischen Überschuß vor, finden sich erhebliche Mengen an unverbranntem oder nur teilweise verbranntem Kraftstoff im Abgas, während bei einem stöchiometrischen Überschuß des Sauerstoffs der Luft in dem Kraftstoff-LuftGemisch eine entsprechend höhere Konzentration des Sauerstoffes in dem Abgas zu verzeichnen ist. Zur Einstellung eines optimalen Kraftstoff-Luft-Gemisches ist es bekannt, die Zusammensetzung des Abgases mit einer Grenzstromsonde (Lambdasonde) zu ermitteln. Die Grenzstromsonde weist hierbei einen zwischen zwei Elektroden angeordneten Festelektrolyten auf, wobei eine Elektrode dem Abgas über eine Diffusionsbarriere ausgesetzt ist. Bei einer an den Elektroden angelegten konstanten Spannung stellt sich aufgrund eines Sauerstoffkonzentrationsunterschiedes an den beiden Elektroden ein Grenzstrom ein, der mit einer Meßeinrichtung gemessen wird, und beispielsweise zum Einstellen des Kraftstoffluftgemisches mit dem die Verbrennungskraftmaschine betrieben wird, ausgewertet wird.

Eine derartige Grenzstromsonde ist beispielsweise aus der DE-PS 37 28 618 bekannt. Hierbei ist eine als Pumpelektrode ausgebildete Elektrode in einem Diffusionskanal angeordnet, der einseitig mit dem zu messenden Gasgemisch in Verbindung steht. Innerhalb des Diffusionskanals ist eine Diffusionsbarriere angeordnet, die so beschaffen ist, daß sich an der über die Diffusionsbarriere mit dem Abgas verbundenen Elektrode ein Sauerstoffpartialdruck einstellt, der der angelegten Spannung entspricht.

Aus der unveröffentlichten Patentanmeldung mit dem Aktenzeichen P 44 39 901.4-52 ist weiterhin bekannt, eine derartige Pumpelektrode zur Bestimmung des Sauerstoffpartialdruckes mit einer zweiten Elektrode zur Bestimmung von Stickoxiden in Gasgemischen zu kombinieren. Hierbei wird die erste Elektrode von einer gasdurchlässigen Membran bedeckt. Eine weitere Möglichkeit zur Bestimmung von weiteren Gasbestandteilen, insbesondere von Stickoxiden in Gasgemischen, wird in dem Artikel von N. Kato, K. Nagakaki und N. Ina in: *SAE* 1996, Seite 137ff beschrieben. Nachteilig bei diesem bisher bekannten Verfahren war insbesondere die Reaktivität der Stickoxide und anderer Gaskomponenten mit Teilen der Elektrode oder des Katalysators.

Vorteile der Erfindung

Die erfindungsgemäße Meßanordnung zur Bestimmung von Gasbestandteilen in Gasgemischen, insbesondere in Abgasen von Verbrennungsmotoren besteht aus mindestens einer elektrochemischen Festelektrolytmeßzelle, deren Kathode mit einer selektiv sauerstoffionenleitenden Schicht bedeckt ist, die von der Kathode durch eine elektrisch isolierende Schicht getrennt ist. Damit wird insbesondere erreicht, daß eventuelle Bestandteile des Abgases, wie beispielsweise Schwefeloxide und Stickstoffoxide nicht mit der Kathode reagieren können. Weiterhin wird durch die räumliche Trennung ermöglicht, daß elektrisch leitende Materialien als sauerstoffionenleitende Schicht verwendet werden können, ohne daß das an der Kathode 15 der Pumpzelle anliegende elektrische Potential die katalytischen Eigenschaften der sauerstoffionenleitenden Schicht beeinflußt. Das Meßgas kann derart gezielt von Sauerstoff befreit werden, so daß andere Gaskomponenten später selektiv bestimmt werden können.

Weitere vorteilhafte Ausgestaltungen und Weiterbildungen der Erfindung ergeben sich aus den in den Unteransprüchen aufgeführten Merkmalen.

Durch die Anordnung einer zweiten Kathode, die nicht mit einer derartigen sauerstoffionenleitenden Schicht bedeckt ist, wird erreicht, daß nach Abpumpen des Sauerstoffes weitere Gaskomponenten innerhalb des Gasstromes selektiv detektiert werden können. Hierbei ist insbesondere an die Detektion von Stickoxiden bzw. von Kohlenwasserstoffen oder Schwefeloxiden zu denken, die durch geeignete Elektrodenwahl der zweiten Elektrode bzw. der zweiten Kathode bestimmt werden können. Besonders vorteilhaft ist, daß durch Beschaffenheit und Dicke der sauerstoffionenleitenden Schicht die Pumpleistung der ersten Sauerstoffpumpzelle einstellbar ist. Hierbei ist es denkbar, das Verfahren so zu optimieren, daß beispielsweise schnell der gesamte Sauerstoff abgepumpt werden kann und in weiteren angeordneten Elektroden einzelne Gasbestandteile des Gasgemisches analysiert werden können.

In besonders vorteilhafter Ausführung besteht diese sauerstoffionenleitende Schicht aus einer gemischtleitenden Keramik. Beispielsweise können hierzu Verbindungen, wie gemischtleitende Metalloxide, bevorzugt deren mit Elementen der Seltenen Erden dotierten Strukturvarianten, beispielsweise Perowskite oder Elpasolithe, aber auch Cuprite, Ferrite und Cobaltite verwendet werden.

In bevorzugter Weise besteht die sauerstoffionenleitende Schicht aus einem katalytisch aktiven gemischten Metalloxid, was dazu führt, daß diese Pumpzelle als Lambdasensor eingesetzt werden kann, da hierbei der Gleichgewichtssauerstoff bestimmt wird.

Eine weitere vorteilhafte Ausführung ist die Verwendung von gemischten sauerstoffionenleitenden Metalloxiden, die keine Veränderung der Gasbestandteile bewirkt, was dazu führt, daß der freie, nicht im Gleichgewicht abreagierte Sauerstoff gemessen wird. Dies ermöglicht beispielsweise in bevorzugter, einfacher Weise, eine Diagnose über die Qualität und die Leistungsfähigkeit sowie des aktuellen Zustandes eines Katalysators, beispielsweise eines Katalysators für Gasgemische von Verbrennungsmotoren.

In einer weiteren bevorzugten Ausführung ist es denkbar, gemischtleitende Oxide zu verwenden, die selektive Gasreaktionen an ihrer Oberfläche zulassen, was eine weitere Selektionsmöglichkeit für verschiedene Gaskomponenten, beispielsweise von Stickoxiden im Gasgemisch darstellt.

In einer besonders vorteilhaften Ausführung ist der Diffusionskanal in einem hitzebeständigen Glas angeordnet, was dazu führt, daß bei einem post-firing-Montageprozeß der Meßanordnung sämtliche Teile der Meßanordnung getrennt voneinander aufgebaut werden können und bei niedrigen Temperaturen zusammengefügt werden. Weiterhin führt der Einsatz von hitzebeständigem Glas dazu, daß eventuelle Gasbestandteile nicht oder nur sehr schwer mit dem Material, in dem der Diffusionskanal angeordnet ist, reagieren können, wie dies beispielsweise bei bislang verwendeten Keramiken der Fall ist.

In einer weiteren vorteilhaften Ausführung ist die gesamte Meßanordnung beheizbar, so daß relativ schnell die Betriebstemperatur erreicht werden kann und damit auch komplexe Gasmischungen nach kurzer Zeit bestimmt werden können.

Eine weitere vorteilhafte Ausführung besteht auch in der Herstellung im post-firing-Verfahren der mehrlagigen Meßanordnung, wodurch vielfältige Materialkombinationen eingesetzt werden können, die anderweitig, beispielsweise in einem co-firing-Montageverfahren durch die hohe Temperatur nicht miteinander kombiniert werden können, da sich Teile der mehrlagigen Anordnung schon vorher zersetzen würden. Selbstverständlich ist bei der erfindungsgemäßen Meßanordnung bei geeigneter Materialwahl auch ein co-firing Montageverfahren möglich.

Zeichnung

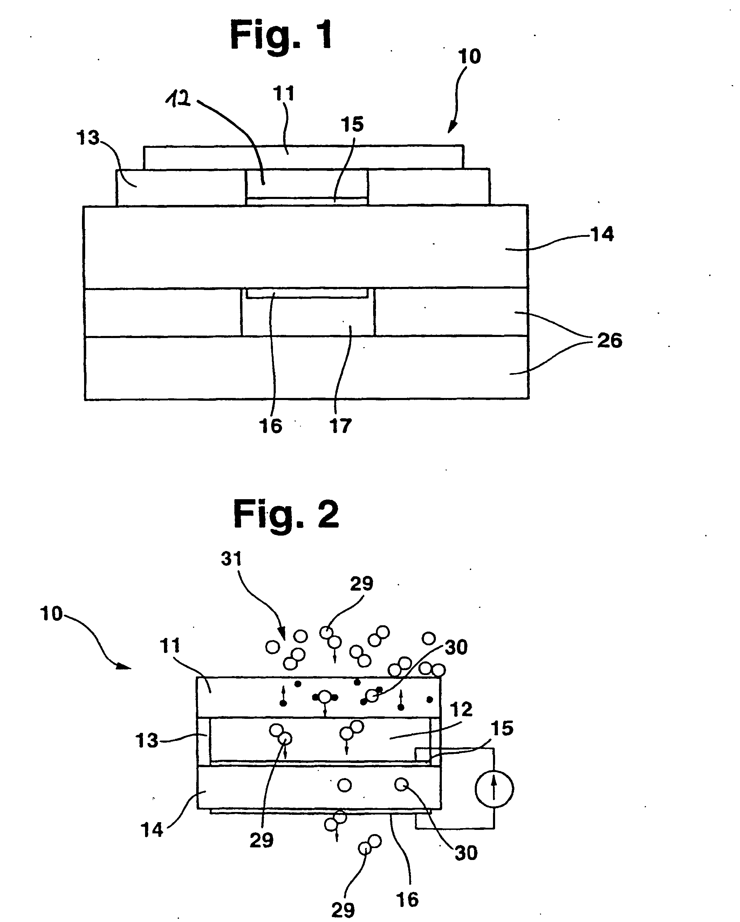

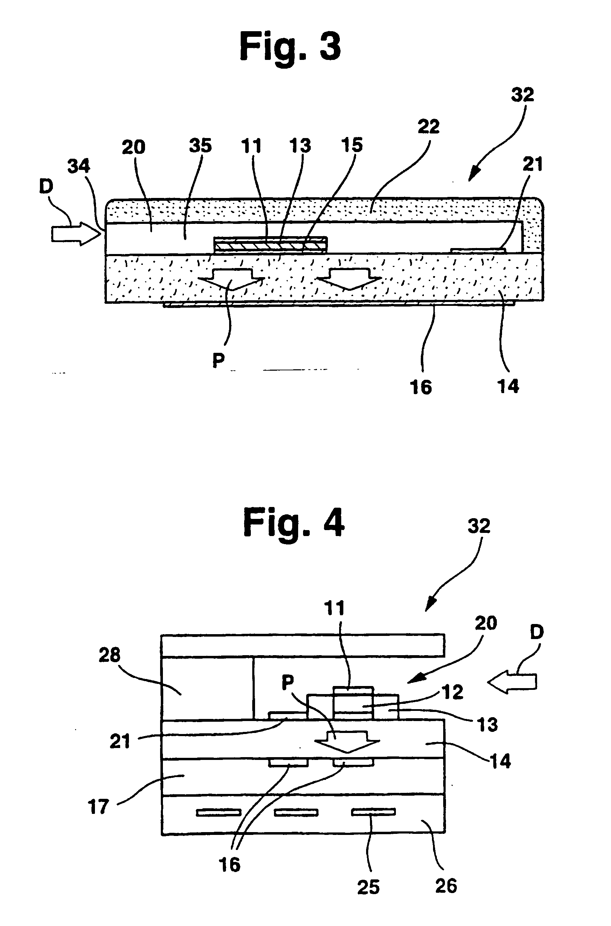

Die erfindungsgemäße Meßanordnung wird nachfolgend in vier Zeichnungen erläutert. Figur 1 zeigt den Querschnitt und den erfindungsgemäßen mehrlagigen Aufbau der ersten Kathode, Figur 2 zeigt die Wirkungsweise der in Figur 1 dargestellten Meßanordnung, Figur 3 zeigt ein Ausführungsbeispiel für eine Meßanordnung, Figur 4 zeigt ein weiteres Ausführungsbeispiel für eine Meßanordnung.

Beschreibung der Ausführungsbeispiele

Figur 1 zeigt eine allgemein mit 10 bezeichnete Meßanordnung. Diese Meßanordnung 10 besitzt einen im wesentlichen plättchenförmig ausgebildeten Festelektrolyten 14, an dessen Seite eine als Anode geschaltete Elektrode 16 angeordnet ist. An der der Anode 16 gegenüberliegenden Seite des Festelektrolyten 14, beispielsweise aus einer Zirkoniumdioxid-Yttriumoxid-Keramik, ist eine als Kathode geschaltete Elektrode 15 angeordnet. Die Kathode 15 ist mit einer gasdichten Schicht 13, beispielsweise aus $\alpha$- oder $\gamma$-Aluminiumoxid bedeckt, welches im Bereich 12 oberhalb der Kathode gasdurchlässig ist. Diese elektrisch isolierende Schicht 12, 13 ist mit einer weiteren Schicht 11 bedeckt, die aus einem gemischtleitenden Metalloxid, beispielsweise einem Perowskit, wie $La_{0.6}Sr_{0.4}Co_{0.8}Cu_{0.2}O_{3-\delta}$ oder $Gd_{0.7}Ca_{0.3}FeO_{3-\delta}$ bedeckt. Die Dicke der Schicht variiert zwischen 5 bis 200 $\mu m$. Sowohl die Anode 16 als auch die Kathode 15 sind über nicht dargestellte Leiterbahnen mit ebenfalls nicht dargestellten Anschlüssen der Meßanordnung 10 verbunden. Die Elektroden 15, 16 bestehen vorzugsweise aus Platin oder einem anderen korrosionsbeständigen Metall bzw. einer Metallegierung. Unterhalb der Anode 16 ist ein Diffusionskanal 17 angebracht, durch den Referenzluft an die Anode geführt werden kann. Der Diffusionskanal 17 für die Referenzluft ist in einem aus mehreren Schichten 26 aufgebauten Mehrlagenkörper aus beispielsweise Zirkoniumdioxid angebracht.

Figur 2 zeigt die Wirkungsweise der Meßanordnung aus Figur 1. Der Meßanordnung 10 wird ein Gasgemisch 31 zugeführt. In dem Gasgemisch 31 befinden sich $0_2$-Moleküle 29, die abgepumpt werden und durch die sauerstoffionenleitende Schicht 11 in Form von $0^{2-}$-Ionen 30 hindurchdiffundieren, wobei sie an der Phasengrenze 11,12 zu molekularem Sauerstoff 29 rekombinieren. Dort werden sie nun in bekannter Weise von der Pumpelektrode 15 erfaßt und über den Pumpstrom quantitativ bestimmt. Die anderen Bestandteile des Gasgemisches 31 werden nicht durch die selektiv sauerstoffionenleitende Schicht 11 hindurchgeleitet.

Figur 3 zeigt ein mögliches Ausführungsbeispiel einer Meßanordnung für die selektive Bestimmung von zwei Komponenten in einem Meßgas. Der Meßfühler 32 besitzt einen im wesentlichen plättchenförmig ausgebildeten Festelektrolyten 14, an dessen eine Seite eine als Anode geschaltete Elektrode 16 angeordnet ist. An der der Anode 16 gegenüberliegenden Seite des Festelektrolyten 14 ist eine als Kathode geschaltete Elektrode 15 angeordnet, die mit einer isolierenden Schicht 12, 13 sowie mit einem selektiv sauerstoffionenleitenden Material 11 bedeckt ist. Die zweite Kathode 21 ist im Diffusionskanal 20 hinter der ersten Elektrode 15 angeordnet. Sowohl die Anode 16 als auch die Kathoden 15 und 21 sind über nicht dargestellte Leiterbahnen mit ebenfalls nicht dargestellten Anschlüssen des Meßfühlers 32 verbunden. Die Elektroden sind porös und gasdurchlässig und können beispielsweise aus Platin bestehen. Der Festelektrolyt 14 besteht beispielsweise aus einem mit Yttriumoxid stabilisierten Zirkoniumoxid. Die Kathoden 15 und 21 sind innerhalb eines Diffusionskanals 20 angeordnet. Der Diffusionskanal 20 besitzt an seiner einen Seite eine Öffnung 34 und ist an seiner anderen Seite abgeschlossen. Der Diffusionskanal 20 bildet somit eine Sackausnehmung. Zur Ausbildung des Diffusionskanals 20 besitzt der Meßfühler 32 eine Abdeckung 22, die als Schicht über dem Festelektrolyten 14 angeordnet ist und eine dem Diffusionskanal 20 ergebende Ausnehmung aufweist. Innerhalb des Diffusionskanales 20 ist die Kathode 15 in der Nähe der Öffnung 34 angeordnet, während die zweite Kathode 21 von der Öffnung 34 entfernt angeordnet ist. Die erste Kathode 15 ist somit zwischen der Öffnung 34 und der zweiten Kathode 21 angeordnet.

Der Meßfühler ist einem Gasgemisch, beispielsweise dem Abgas einer Verbrennungskraftmaschine, ausgesetzt. Hierzu weist der Meßfühler 32, in der Figur nicht dargestellt, Haltemittel auf. Das Gasgemisch liegt an der Anode 16 und hier mit einem Pfeil D angedeutet, in dem Diffusionskanal 20 an. Die Abdeckung 28 ist gasdicht ausgeführt, so daß das Gasgemisch 31 nur über die Öffnung 34 in den Diffusionskanal 20 gelangen kann. Das Gasgemisch 31 enthält typischerweise vor allem Sauerstoff und Stickoxide sowie weitere Bestandteile. Innerhalb des Diffusionskanals 20 ist eine Diffusionsbarriere 35 angeordnet, die vorzugsweise porös ist. Die Diffusionsbarriere 35 verhindert, daß sich bei einer Änderung der Zusammensetzung des Gasgemisches dieses nicht gleichzeitig an der Anode 16 und an den Kathoden 15 bzw. 21 anliegt. Da die Kathode 15 vor der Kathode 21 innerhalb des Diffusionskanals 20 angeordnet ist, gelangt das Gasgemisch 31 nur zu der Kathode 21, wenn dieses zuvor die Kathode 15 passiert hat. Die Beschichtung 11 ist hierbei ausschließlich für den Sauerstoff in Form von Sauerstoffionen durchlässig, so daß weiterhin die in dem Gasgemisch 31 enthaltenden weiteren Bestandteile, beispielsweise Stickoxide oder Kohlenwasserstoffe die Kathode 15 nicht erreichen können. Bei dem in Figur 3 dargestellten Meßfühler wurde aus Gründen der Übersichtlichkeit auf die Darstellung einer Heizeinrichtung, über die derartige Heizfühler in der Regel verfügen, verzichtet. Die Heizeinrichtung dient dazu, den Meßfühler 32 auf eine notwendige Betriebstemperatur von mehreren 100° C zu erwärmen.

Ein weiteres Ausführungsbeispiel für einen Meßfühler 32 ist in Figur 4 gezeigt. Das Material der Abdeckung 28 besteht aus einem hitzebeständigen Material, beispielsweise einem chemisch und thermisch resistenten Glas und/ oder Glaskeramik. Ein Glas bzw. eine Glaskeramik, deren chemische Zusammensetzung von der im Material der Abdeckung 28 verwendeten sein kann, dient zum gasdichten Verschluß der bereichsweise gasdurchlässigen isolierenden Schicht 12 und dient gleichzeitig als weitere isolierende Schicht 13. Der Meßfühler 32 ist mit wenigen, an sich bekannten und beherrschbaren Druckschritten, beispielsweise im Siebdruck herstellbar und die einzelnen Bestandteile der Schichten 26, 14, 16 und 28 können sowohl im co- als auch im post-firing-Verfahren aufgetragen und miteinander verbunden werden. Insbesondere die Verwendung von einer glasartigen Überdeckung 28 ermöglicht die Herstellung im postfiring-Verfahren.

In einer weiteren Schicht 26 aus beispielsweise Aluminiumoxid ist ein Heizelement 25 angeordnet.

Der in den Figuren 3 und 4 gezeigte Meßfühler 32 übt folgende Funktion aus:

Beim Betrieb des Meßfühlers 32 ist zwischen der ersten Kathode 15 und der Anode 16 eine Pumpspannung angelegt. Zwischen der Kathode 21 und der Anode 16 liegt eine weitere, schaltungstechnisch von der Pumpspannung getrennte Spannung an. Das Gasgemisch 31 diffundiert durch den Diffusionskanal 20 an der Beschichtung 11 der ersten Kathode 15 vorbei. Da die Beschichtung 11 ausschließlich sauerstoffionen selektiv ist, diffundiert der Sauerstoff zur Kathode 15 durch die räumlich getrennte elektrisch isolierende Schicht 12, die bewirkt, daß Schicht 11 spannungsfrei ist. Aufgrund der zwischen der Kathode 15 und der Anode 16 angelegten Pumpspannung wird der Sauerstoff $O_2$ aus dem Gasgemisch 31 abgepumpt. Hierbei läuft folgende Umsetzungsreaktion ab:

$$I/2O_2 + 2e^- \rightarrow O^{2-}$$

Der Sauerstoff $O_2$ wird also wie in der Figur mit den Pfeilen P angedeutet ist, als Sauerstoffion $O^{2-}$ von der Kathode 15 zur Anode 16 durch den Festelektrolyten 14 gepumpt, so daß ein Pumpstrom über den Festelektrolyten 14 fließt. Der Pumpstrom kann mittels eines nicht dargestellten Meßinstrumentes, beispielsweise eines Amperometers, gemessen werden und bildet einen Anhaltspunkt für eine in dem Gasgemisch 31 vorhandene Sauerstoffkonzentration. Das in den Diffusionskanal 20 eintretende Gasgemisch 31 diffundiert nunmehr an der Kathode 15 vorbei zur Kathode 21. Aufgrund der erläuterten Abpumpung des Sauerstoffs $O_2$ aus dem Gasgemisch 31 liegt an der Kathode 21 ein im wesentlichen von dem Sauerstoff $O_2$ befreites Gasgemisch 31 an. Dieses enthält somit im wesentlichen nur noch Bestandteile wie Stickoxide, Kohlenwasserstoffe etc. Durch die an der Kathode 21 und der Anode 16 angelegte Spannung entsteht ein Grenzstromsignal, das beispielsweise ausschließlich von der Stickoxidkonzentration im Gasgemisch 31 abhängig ist. Dieses Grenzstromsignal kann über eine Meßeinrichtung, beispielsweise ein Amperometer, ausgewertet werden.

Es wird also klar, daß der Meßfühler 32 geeignet ist, unabhängig voneinander einerseits eine Sauerstoffkonzentration, andererseits ein weiteres Bestandteil des Gasgemisches 31 zu detektieren. Dadurch, daß der Sauerstoff vor Erreichen des Gasgemisches 31 der zweiten Kathode 21 aus dem Gasgemisch 31 abgepumpt wird, sind beispielsweise Stickoxide quantitativ auch in kleinen Mengen in dem Gasgemisch 31 nachweisbar.

Eine weitere Variante der erfindungsgemäßen Meßanordnung besteht in der Beschichtung der zweiten Elektrode 21 mit einem Material, beispielsweise entsprechend dotierte gemischte Metalloxide bzw. binäre und ternäre Mischungen aus Nichtmetallen und Metallen, die entsprechend dotiert sind, welches selektiv durchlässig ist für gesättigte und/oder gesättigte Kohlenwasserstoffe oder Schwefeldioxid bzw. Stickoxide. Dadurch können in einer weiteren, nicht dargestellten Ausführung, mehrere hintereinander in einem Diffusionskanal 20 angeordnete Kathoden mit jeweils spezifisch sensitiver Beschichtung verschiedene Bestandteile des Gasgemisches detektieren.

Die Anwendungsbereiche des erfindungsgemäßen Meßfühlers 32 in Abhängigkeit von der Art des verwendeten sauerstoffionenleitenden Metalloxides lassen sich folgendermaßen zusammenfassen:

1. Die sauerstoffionenleitende Schicht 11 bewirkt keine Veränderung der übrigen Gaskomponenten im Gasgemisch; es wird somit der freie Sauerstoff im zu messenden Gasgemisch bestimmt. Als Anwendungsbereich ist daher beispielsweise die Kontrolle des Zustandes eines Abgaskatalysators bei Verbrennungsmotoren denkbar, selbstverständlich aber auch in anderen Gebieten, beispielseise der Thermotechnik usw.

2. Die sauerstoffionenleitende Schicht 11 ist nicht stoffspezifisch katalytisch aktiv; es wird somit der Gleichgewichtssauerstoff bestimmt und der erfindungsgemäße Meßfühler kann beispielsweise als λ-Sonde verwendet werden.

3. Die sauerstoffionenleitende Schicht 11 ist stoffspezifisch katalytisch aktiv; es können daher je nach Art der Schicht 11 einzelne Gaskomponenten, die selektiv mit der sauerstoffionenleitenden Schicht in physikalisch-chemischer Wechselwirkung stehen bestimmt werden.

Der Meßfühler 32 ist insgesamt mit wenigen, an sich bekannten und beherrschbaren Druckschritten, beispielsweise im Siebdruck herstellbar. Diese Strukturen können auf Grünkörper aufgetragen werden und dann als einzelne Bestandteile im cofiring- oder im postfiring-Verfahren zusammengefügt werden.

## Patentansprüche

1. Meßanordnung zur Bestimmung von Gasbestandteilen in Gasgemischen, mit mindestens einer elektrochemischen Festelektrolytmeßzelle mit mindestens einer dem zu messenden Gasgemisch ausgesetzten Kathode (15), die durch eine elektrisch nicht leitende, zumindest bereichsweise gasdurchlässige Schicht (12, 13) bedeckt ist, **dadurch gekennzeichnet, dass** die Kathode (15) von einer selektiv sauerstoffionenleitenden Schicht (11), die eine gemischtleitende Keramik enthält und die die zumindest bereichsweise gasdurchlässige Schicht (12, 13) bedeckt, räumlich getrennt ist.

2. Meßanordnung nach Anspruch 1, **dadurch gekennzeichnet, daß** die mit der sauerstoffionenleitenden Schicht (11) bedeckte Kathode (15) innerhalb eines Diffusionskanals (20) zwischen einer Öffnung (34) des Diffusionskanals (20) und mindestens einer zweiten Kathode (21) angeordnet ist.

3. Meßanordnung nach Anspruch 1 oder 2, **dadurch gekennzeichnet, daß** die mit der sauerstoffonenleitenden Schicht (11) bedeckte Kathode (15) mit einer Anode (16) eine Sauerstoffpumpzelle bildet.

4. Meßanordnung nach einem der vorhergehenden Ansprüche, **dadurch gekennzeichnet, daß** über die Beschaffenheit und Dicke der sauerstoffionenleitenden Schicht (11) die Pumpleistung der Sauerstoffpumpzelle einstellbar ist.

5. Meßanordnung nach Anspruch 1, **dadurch gekennzeichnet, daß** die gemischtleitende Keramik aus einem Perowskit oder Elpasolith, insbesondere $Gd_{0.7}Ca_{0.3}Fe_{O3-\delta}$ oder $La_{0.6}Sr_{0.4}Co_{0.8}Cu_{0.2}O_{3-\delta}$ besteht.

6. Meßanordnung nach Anspruch 1, **dadurch gekennzeichnet, daß** die sauerstoffionenleitende Schicht (11) stoffspezifisch katalytisch aktiv ist.

7. Meßanordnung nach Anspruch 2, **dadurch gekennzeichnet, daß** der Diffusionskanal (20) als Tunnelstruktur in hitzebeständigem Glas angefertigt ist.

8. Meßanordnung nach einem der vorhergehenden Ansprüche, **dadurch gekennzeichnet, daß** wenigstens eine Anode (16) in einem zweiten Diffusionskanal (17) angeordnet ist.

9. Meßanordnung nach einem der vorhergehenden Ansprüche, **gekennzeichnet durch** eine Heizeinrichtung.

## Claims

1. Measuring arrangement for detecting gas constituents in gas mixtures, having at least one electrochemical solid electrolyte measuring cell with at least one cathode (15), which is exposed to the gas mixture to be measured and is covered by an electrically nonconductive layer (12, 13) which is gas-permeable at least in regions, **characterized in that** the cathode (15) is spatially separated from a layer (11) which selectively conducts oxygen ions, contains a mixed-conducting ceramic and covers the layer (12, 13) which is at least regionally gas-permeable.

2. Measuring arrangement according to Claim 1, **characterized in that** the cathode (15) which is covered by the layer (11) which conducts oxygen ions is arranged within a diffusion channel (20), between an opening (34) of the diffusion channel (20) and at least a second cathode (21).

3. Measuring arrangement according to Claim 1 or 2, **characterized in that** the cathode (15), which is covered by the layer (11) which conducts oxygen ions, together with an anode (16), forms an oxygen pump cell.

4. Measuring arrangement according to one of the preceding claims, **characterized in that** the pumping capacity of the oxygen pump cell can be set by means of the condition and thickness of the layer (11) which conducts oxygen ions.

5. Measuring arrangement according to Claim 1, **characterized in that** the mixed-conducting ceramic consists of a perovskite or elpasolite, in particular $Gd_{0.7}Ca_{0.3}Feo_{3-\delta}$ or $La_{0.6}Sr_{0.4}Co_{0.8}Cu_{0.2}O_{3-\delta}$.

6. Measuring arrangement according to Claim 1, **characterized in that** the layer (11) which conducts oxygen ions has a substance-specific catalytic activity.

7. Measuring arrangement according to Claim 2, **characterized in that** the diffusion channel (20) is produced as a tunnel structure in heat-resistant glass.

8. Measuring arrangement according to one of the preceding claims, **characterized in that** at least one anode (16) is arranged in a second diffusion channel (17).

9. Measuring arrangement according to one of the preceding claims, **characterized by** a heating device.

**Revendications**

1. Disposition de mesure permettant la détermination de constituants gazeux dans des mélanges de gaz, avec au moins une cellule de mesure à électrolyte fort électrochimique comportant au moins une cathode (15) exposée au mélange gazeux à mesurer, recouverte d'une couche (12, 13) électriquement non conductrice, perméable aux gaz au moins par endroits,
 **caractérisée en ce que**
 la cathode (15) est séparée dans l'espace par une couche (11) sélectivement conductrice d'ions d'oxygène, qui contient une céramique conductrice mixte et qui recouvre la couche (12, 13) perméable aux gaz au moins par endroits.

2. Disposition de mesure selon la revendication 1,
 **caractérisée en ce que**
 la cathode (15) recouverte de la couche (11) conduisant les ions d'oxygène est disposée à l'intérieur d'un canal de diffusion (20) entre une ouverture (34) du canal de diffusion (20) et au moins une deuxième cathode (21).

3. Disposition de mesure selon la revendication 1 ou 2,
 **caractérisée en ce que**
 la cathode (15) recouverte de la couche conduisant les ions d'oxygène (11) forme une cellule de pompage d'oxygène avec une anode (16).

4. Disposition de mesure selon l'une quelconque des revendications précédentes,
 **caractérisée en ce que**
 la puissance de la cellule de pompage d'oxygène peut être réglée par l'intermédiaire de la composition et de l'épaisseur de la couche conduisant les ions d'oxygène (11).

5. Disposition de mesure selon la revendication 1,
 **caractérisée en ce que**
 la céramique conductrice mixte est constituée d'une pérowskite ou elpasolite, en particulier de $Gd_{0.7}Ca_{0.3}FeO_{3-\delta}$ ou de $La0_{,6}Sr0_{,4}Co0_{,8}Cu0_{,2}O_{3-\delta}$.

6. Disposition de mesure selon la revendication 1,
 **caractérisée en ce que**
 la couche conductrice d'ions d'oxygène (11) a une action catalytique spécifique à la matière. ,

7. Disposition de mesure selon la revendication 2,
 **caractérisée en ce que**
 le canal de diffusion (20), en tant que structure tunnel, est en verre résistant aux hautes températures.

8. Disposition de mesure selon l'une quelconque des revendications précédentes,

**caractérisée en ce qu'**
au moins une anode (16) est disposée dans un deuxième canal de diffusion (17).

9. Disposition de mesure selon l'une quelconque des revendications précédentes,
**caractérisée par**
un dispositif de chauffage.

# Fig. 1

# Fig. 2

# Fig. 3

# Fig. 4